# EUROPEAN PATENT APPLICATION

(11) **EP 2 251 791 A1**
(43) Date of publication of application: **17.11.2010**
(21) Application number: 09705607.1
(22) Date of filing: 14.01.2009
(51) Int. Cl.: G06F 12/00

(54) **MEMORY ACCESS TIMING ADJUSTMENT DEVICE AND MEMORY ACCESS TIMING ADJUSTMENT METHOD**

(30) Priority: 29.01.2008 JP 2008018341
(71) Applicant: Panasonic Corporation, Kadoma-shi Osaka 571-8501 (JP)
(72) Inventor: KAJIMURA, Toshiyuki, Osaka-shi, Osaka 540-6207 (JP)
(74) Representative: Kügele, Bernhard
(86) International application number: PCT/JP2009/000102
(87) International publication number: WO 2009/096141

(57) **Abstract**

A memory access timing adjustment device according to the present invention includes separate memory interfaces (632A to 632D) each of which is separately connected to a corresponding one of the external memories (2) and which transmits and receives data for memory access, a pattern generating circuit (633) which generates specific pattern data, and a processor (60) which adjusts an access timing by causing a separate memory interface connected to the selected external memory to transmit and receive data to and from the selected external memory multiple times, and by placing a load on the external memories by causing at least one separate memory interface connected to at least one external memory other than the selected external memory to transmit the specific pattern data to the at least one external memory.

## Description

### Technical Field

The present invention relates to a memory access timing adjustment device which adjusts access timing for accessing a memory and a memory access timing adjustment method.

### Background Art

Conventionally, with regard to access timing when a memory controller on an LSI accesses a memory, using the same value, that is, a fixed value for all set would not have caused any problem since the clock frequency was low. However, along with the improvement on the function of the set, the clock frequency of the memory interface has gradually increased, and this has caused the access timing to be short. As a result, it becomes necessary to adjust the access timing according to the status of the sets, instead of simply using the fixed value.

In response to this need, an access timing adjustment register and a circuit are embedded in an LSI. The register is for adjusting access timing, and the circuit is capable of changing timing of signals for memory interface provided by the LSI, or timing of the received signal within the LSI, triggered by the change in the value of the register.

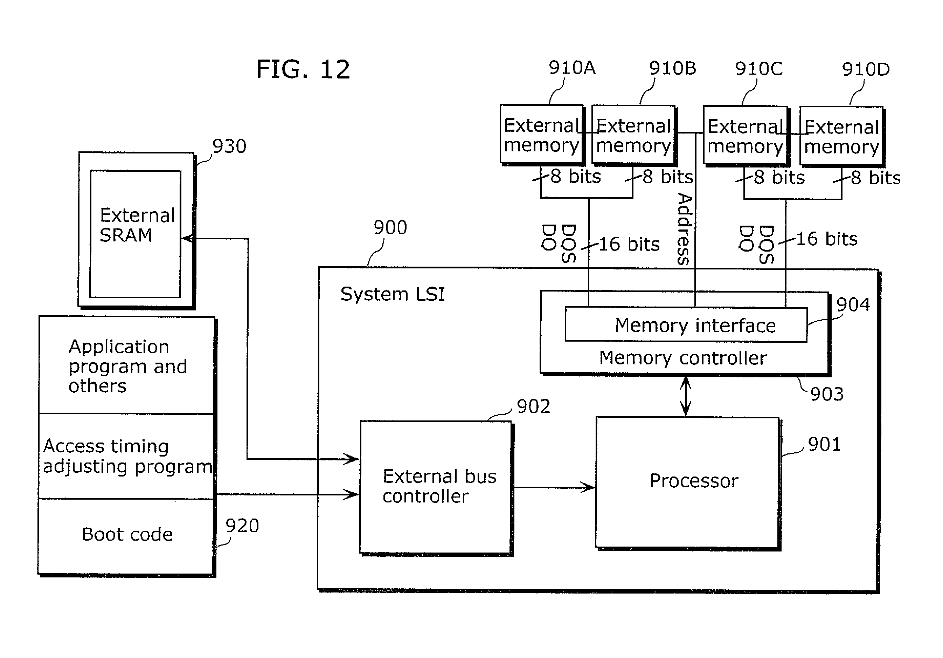

The following describes the structure and the operation of the system according to the conventional technology with reference to FIG. 12. FIG. 12 is a functional structural diagram of the conventional memory access timing adjustment system The memory access timing adjustment system in FIG. 12 includes a system LSI 900, external memories 910A, 910B, 910C, and 910D, an external nonvolatile memory 920, and an external SRAM 930.

The system LSI 900 is embedded with a processor 901, an external bus controller 902, and a memory controller 903.

The processor 901 is connected to the memory controller 903 and the external bus controller 902.

The memory controller 903 includes a memory interface 904, and is connected to the external memories 910A, 910B, 910C, and 910D through a memory bus.

The external nonvolatile memory 920 and the external SRAM 930 are connected to the processor 901 through the external bus controller 902.

The processor 901 loads a boot code from the external nonvolatile memory 920 through the external bus controller 902 upon activation, and executes a code written therein, that is, an instruction.

An access timing adjustment program is also written in the external nonvolatile memory 920. Thus, when the processor 901 executes the access timing adjustment program, the processor 901 writes data in a region in a memory, reads data from the same region, and compares the read data and an expected value to determine OK/NG. The memory controller 903 is provided with an access timing adjustment register for adjusting the access timing. The processor 901 writes memory, reads memory, and compares the read value with the expected value to determine OK/NG each time a value set on the register is changed. The following specifically describes a setting value of the access timing adjustment register.

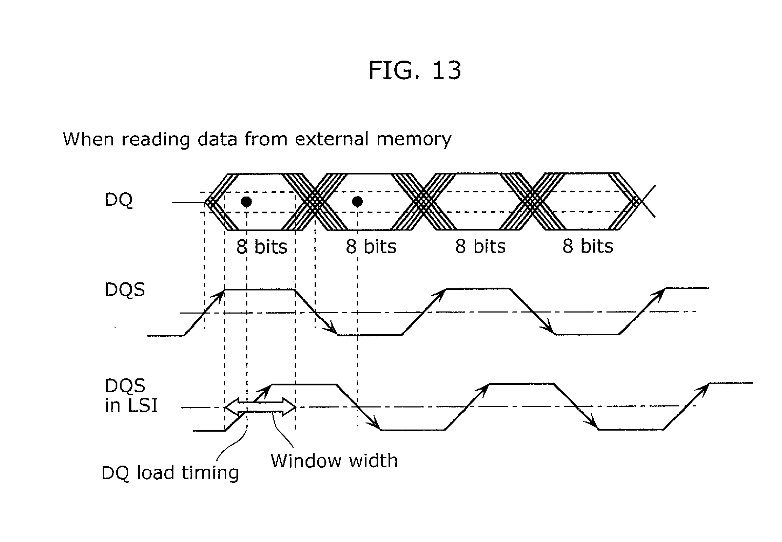

FIG. 13 is an operational timing chart when reading data from the external memory to the LSI. Double Data Rate Synchronous DRAM (DDR SDRAM) is used for the external memories 910A to 910D as clock synchronized memories, for example. Data strobe signals (described as DQS in FIGS. 12 and 13) synchronized with a first clock signals is used to notify the memory controller 903 of the timing to transfer 8-bit data (described as DQ in FIGS. 12 and 13) are used. When reading data from the external memory, the data DQ is outputted from the external memory with the same phase as the data strobe DQS. The memory controller 903 generates a data strobe signal at the timing with a phase 90 degrees delayed from the data strobe signal synchronized with the first clock signal, for example, in order to receive the data certainly. In other words, 8-bit data is read at the time when the data strobe signal rises and falls. However, waveform distortion on the received data strobe signal occurs due to external causes such as variation in power source or noise, causing the phase of the received data strobe signal to be displaced when detecting the edges of the data strobe signal. In order to address this problem, it is necessary for the memory controller 903 to set the window width which is in a predetermined phase range from 90 degrees which is a reference phase difference for reading data. The setting value of the access timing adjustment register is the window width represented as most suitable phase difference in bits as the phase difference that can change, in one bit, 180 degrees divided by 128.

With the abovementioned method, the processor 901 calculates the phase range where the memory access is successfully performed, and determines the setting value for the access timing adjustment register with largest operational margin in consideration of conditions such as process variability and voltage fluctuation.

Methods disclosed in Patent Literature 1 to 4 are well known for calculating the optimum setting value for the access timing.

Patent Literature 1 discloses the abovementioned conventional technology, and it discloses a method of writing predetermined data on the address that is determined as a checking address in advance, and determines OK/NG by reading the data, as a method to calculate the optimum setting value for the access timing. More specifically, the highest value and the lowest value for a successful memory access are obtained, and the intermediate value between the highest value and the lowest value is used as a value that sets the widest margin.

Patent Literature 2 discloses a method of adding parity to data upon writing, and uses a parity comparison between the written data and the read data instead of simply comparing the expected value and the read value, in order to determine whether or not the memory access is successful.

Patent Literature 3 discloses a method in which the timing adjustment period, that is, a period in which the access timing setting value is changed and memory access is tried is set as a blanking period, that is, a period in which screen display is not performed.

Patent Literature 4 discloses a method for changing clock skew using the results of data writing from the processor, data reading from the memory, and comparison between the expected value and the actual value.
[Patent Literature 1] Japanese Unexamined Patent Application Publication No. 2001-350668
[Patent Literature 2] Japanese Unexamined Patent Application Publication No. 2003-216479
[Patent Literature 3] Japanese Unexamined Patent Application Publication No. 2005-141725
[Patent Literature 4] Japanese Unexamined Patent Application Publication No. 11-316619

### Summary of Invention

### Technical Problem

However, the conventional methods described above do not consider the load status of the memory bus. Generally, the access timing to the external memory varies depending on the transfer amount and the bit toggle rate of the bus between the memory controller and the external memory. In particular, larger transfer amount between the bus and the memory controller increases the IR drop and the noise, higher bit toggle rate increases the crosstalk and noise between the bits, narrowing down the acceptable width of the access timing to the external memory.

More specifically, the window width of access timing varies depending on the amount of transferred data and the bit toggle rate at the bus between the memory controller and the external memory.

Thus, it is important to vary the amount of transferred data and the bit-toddle rate in the memory bus to optimize the window width. However, with the conventional method, the memory controller cannot access each external memory individually. Thus, when the memory controller transmits and receives data to and from an external memory whose timing is to be adjusted and adjusts the access timing of the external memory, the memory controller cannot individually access the other external memories. Accordingly, the memory controller cannot adjust the access timing specifically reflecting the amount of transferred data and the bit toggle rate of the bus between the memory controller and the external memory at the time of actual operation.

Particularly, it is highly necessary to reproduce a high-load status with large amount of transferred data and high bit toggle rate of the bus between the memory controller and the external memory, and adjust the access timing. For example, the high-load status is usually achieved when the application of the set is actually operating. However, even in an attempt to the operation of the application on the other external memories, it is not easy to use the memory capacity and the address mapping differently from the regular operation while adjusting the timing of a specific external memory.

Accordingly, it is not possible to optimize access timing in the high-load status. In addition, there is a possibility that the operation would be unstable at the time of operating the actual application due to the perfection level of the system LSI, external memories, and the board, depending on the combination of the characteristics.

An LSI dedicated to display images can adjust access timing using a period in which nothing is displayed on screen, i.e., the blanking period. Even if the memory cannot be accessed during this period, resetting the access timing to a default value before starting screen display allows the timing adjustment to be continued without crashing the system.

However, in the system LSI for digital AV appliances such as a digital TV or a DVD recorder, embedded microcomputer and other embedded blocks always use the memory. Thus, the system crashes and operation stops when the external memory cannot be accessed due to simultaneous access timing adjustment. With this, neither the actual application operation nor timing adjustment can be continued. For this reason, the only conventionally available method was to have a working region including the CPU stack in an external SRAM space so that the operation does not stop, and to adjust access timing while in low-load status using simple testing pattern such as the DMA transfer which does not stop operation even when the external memory cannot properly accessed and the data accidentally changes and corrupts, and to use the external memory using the calculated optimal value.

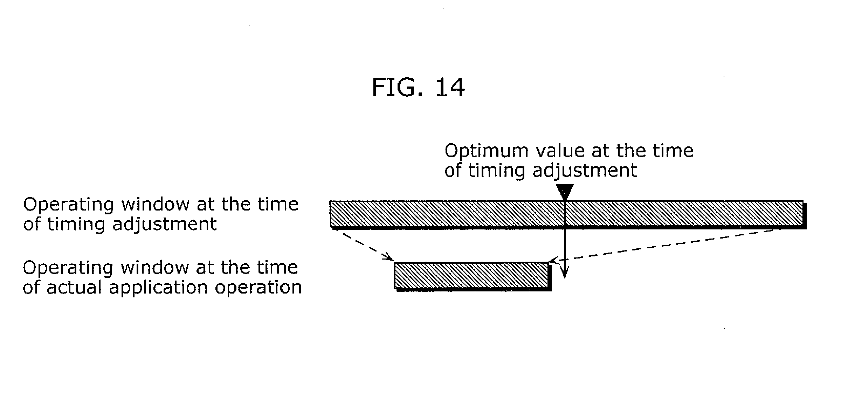

However, as illustrated in the comparison diagram in FIG. 14 between the time when timing is adjusted and when the application is actually operated, even when the access timing of the external memory is optimized with low-load for memory access at the time of timing adjustment, there is a case where the optimum value is significantly displaced at the time of actual application operation, that is, when the system is highly loaded, due to imbalanced reduction of the window width on the maximum value side and the minimum value side from the operating range at the time of low-load. In this case, the optimum value at the time of timing adjustment is excluded from the window width at the time of actual application operation, possibly causing the memory access not to be properly performed. In contrast, the window width at the time of timing adjustment with low load is generally wider than the window width at the time of high load, and thus the optimum value at the time of high-load rarely falls out of the window at the time of low-load.

The present invention has been conceived in light of these problems, and it is a first object of the present invention to provide a memory access timing adjustment device which can adjust access timing of each of the external memories individually, and the memory access timing adjustment method. It is another object of the present invention to provide a memory access timing adjustment device which allows stable memory access even at the time of high load with large amount of transferred data between the external memory and the memory controller and the memory access timing adjustment method.

### Solution to Problem

In order to achieve the object, the memory access timing adjustment device is a memory access timing adjustment device which adjusts timing for accessing external memories, the memory access timing adjustment device including: separate memory interfaces each of which is separately connected to a corresponding one of the external memories and which transmits and receives data for memory access; and a control unit configured to adjust an access timing for an external memory selected from the external memories by causing a separate memory interface connected to the selected external memory to transmit and receive data to and from the selected external memory multiple times.

With this, the separate memory interfaces each of which is separately provided for the corresponding one of the external memories can separately access the external memory. This allows, while receiving and transmitting data to and from the selected external memory to adjust the access timing, separately accessing the other external memories and arbitrarily changing the data transfer amount of the memory bus. Thus, the memory access timing adjustment device is capable of adjusting access timing reflecting the amount of transferred data in the memory bus at the time of actual operation.

Furthermore, it is preferable that the external memories are clock synchronized memories each of which performs input and output operations synchronized to a first clock signal, each of the separate memory interfaces inputs and outputs data using a second clock signal obtained by delaying the first clock signal, the access timing is a phase difference between the first clock signal and the second clock signal, and the control unit changes the access timing for the separate memory interface, determines, each time the access timing is changed, whether or not the access is successful, and adjusts an optimal access timing within a range of phase differences for the successful access.

With this, it is possible to find out the maximum phase difference range for successful data access. Thus, it is possible to adjust access timing in a highly adaptive manner.

In addition, it is preferable that the memory access timing adjustment device according to Claim 1, further includes a pattern generating circuit which generates specific pattern data, in which the control unit is configured to place a load on the external memories by causing at least one separate memory interface connected to at least one external memory other than the selected external memory to transmit the specific pattern data to the at least one external memory.

This allows access to the external memory other than the external memory to be adjusted using a high-load pattern. Thus, it is possible to operate the system with the load on the memory bus close to the load at the time of actual application operation. Thus, it is possible to obtain stable setting value even at the time of high load, compared to the optimal memory access timing value obtained at the time of low load, that is, with low memory access frequency.

In addition, the memory access timing adjustment device may further include a memory selection register which holds a bit indicating the selected external memory, and an address conversion circuit which is connected to the separate memory interfaces and outputs an address of the external memory corresponding to the bit indicating the selected external memory.

Alternatively, the memory access timing adjustment device may further include a memory selection register which holds a bit indicating the selected external memory; and a selector circuit which is connected to the separate memory interfaces and selects a separate memory interface connected to the selected external memory, using the bit indicating the selected external memory.

Thus, providing a memory selection register allows the timing adjustment program not to be subject to change in the actual address allocation in the memory, even when the configuration of the external memory varies or when the connection around the memory interface changes. This eliminates the necessity for changing the access timing adjustment program executed by the control unit, thereby reducing the man-hour for developing the program.

In addition, the memory access timing adjustment device may further include a nonvolatile memory which stores access timings obtained by the access timing adjustment, and each of which is an optimal access timing for each of the separate external memories, in which each of the separate memory interfaces includes an access timing separately setting register which stores, when a system is activated, the optimal access timing read from the nonvolatile memory, and each of the separate memory interfaces uses the optimal access timing for accessing the selected external memory, the optimal access timing being stored in the timing separately setting register.

This eliminates the necessity for the access timing adjustment every time the system is normally activated, reducing the activation time.

In addition, the memory access timing adjustment device may further include a nonvolatile memory which stores (i) access timings obtained by the access timing adjustment, and each of which is an optimal access timing for each of the separate external memories and (ii) a system activation count, in which each of the separate memory interfaces includes a timing separately setting register which stores, when a system is activated, the optimal access timing read from the nonvolatile memory, and the control unit newly adjusts access timing each time the system is activated for a predetermined number of times, and writes, on the nonvolatile memory, the optimal access timing obtained by the access timing adjustment.

This eliminates the necessity for executing the access timing adjustment each time the system is normally activated. In addition, the access timing adjustment is regularly updated. Thus, in addition to the reduced activation time, it is possible to access the external memory while adjusting to the change in the system configuration and the change in status.

In addition, the memory access timing adjustment device may further include a nonvolatile memory which stores (i) access timings obtained by the access timing adjustment, and each of which is an optimal access timing for each of the separate external memories and (ii) a set timing value flag indicating whether or not the optimal access timing is valid, in which each of the separate memory interfaces includes a timing separately setting register which stores, when a system is activated, the optimal access timing read from the nonvolatile memory, and when the set timing value flag is invalid at the time of system activation, the control unit newly adjusts access timing and writes, on the nonvolatile memory, the optimal timing obtained by the access timing adjustment.

With this, setting the set timing value flag as invalid in advance allows automatic update on the access timing adjustment when the system is activated next time. Thus, it is possible to optimally access the external memory while adjusting the change in the system configuration and the status.

In addition, the memory access timing adjustment device may further include a memory information input terminal for inputting a signal indicating a configuration of the external memories, in which an address space allocated to the external memories is changed, added, or removed according to the signal indicating the configuration of the external memories.

This allows finding out the size and connection status of the external memories, thereby achieving the access timing adjustment adjusted to the status of the external memories.

In addition, the control unit may output an alert message when an optimal range of the access timing obtained through the adjustment is equal to or smaller than a predetermined value.

With this, when malfunction is detected in the access timing adjustment result, outputting the alert message allows notifying the user of the malfunction.

Furthermore, the present invention can be achieved not only as the memory access timing adjustment device including those characteristic components, but also as a memory access timing adjustment method including the characteristic components in the memory access timing adjustment device for the memory as steps.

### Advantageous Effects of Invention

According to the memory access timing adjustment device and the memory access timing adjustment method of the present invention, separately providing the memory interfaces for the external memories allows access timing adjustment for each of the external memories. Thus, it is possible to adjust the access timing reflecting the data transfer amount of the memory bus at the time of actual operation. Particularly, it is possible to adjust the access timing in a status close to high load with large data transfer amount of the memory bus. Thus, it is possible to achieve the memory access timing adjustment which stabilizes the memory access at the time of high load.

### Brief Description of Drawings

[FIG. 1] FIG. 1 is a functional structural diagram of the memory access timing adjustment system including the memory access timing adjustment device according to the first embodiment of the present invention.
[FIG. 2] FIG. 2 is a comparative diagram of the window width testing results according to the memory access timing adjustment device of the first embodiment of the present invention and the conventional technology.
[FIG. 3] FIG. 3 is a functional structural diagram of the memory access timing adjustment system including the memory access timing adjustment device according to the first variation of the first embodiment of the present invention.
[FIG. 4] FIG. 4 is a functional structural diagram of the memory access timing adjustment system including the memory access timing adjustment device according to the second variation of the first embodiment of the present invention.
[FIG. 5] FIG. 5 is a functional structural diagram of the memory access timing adjustment system including the memory access timing adjustment device according to the second embodiment of the present invention.
[FIG. 6] FIG. 6 is an operational timing chart when the separate memory interface or the external memory reads specific pattern data.
[FIG. 7] FIG. 7 is a functional structural diagram of the memory access timing adjustment system including the memory access timing adjustment device according to the third embodiment of the present invention.
[FIG. 8] FIG. 8 is a functional structural diagram of the memory access timing adjustment system including the memory access timing adjustment device according to the fourth embodiment of the present invention.
[FIG. 9] FIG. 9 is a functional structural diagram of the memory access timing adjustment system including the memory access timing adjustment device according to the variation of the fourth embodiment of the present invention.
[FIG. 10] FIG. 10 is a functional structural diagram of the memory access timing adjustment system including the memory access timing adjustment device according to the fifth embodiment of the present invention.
[FIG. 11] FIG. 11 is a flowchart of the memory access timing adjustment system including the memory access timing adjustment device according to the sixth embodiment of the present invention.
[FIG. 12] FIG. 12 is a functional structural diagram of the conventional memory access timing adjustment system.
[FIG. 13] FIG. 13 is an operational timing chart when reading data from the external memory to the LSI.
[FIG. 14] FIG. 14 is a comparative diagram of the window widths at the time of adjusting timing according to the conventional technology and actual application operation.

### Reference Signs List

1, 4, 5, 6, 7a, 7b, 7c, 8 Memory access timing adjustment device 1A, 4A, 5A, 6A, 7A, 8A, 900 System LSI
2 External memories
2A, 2B, 2C, 2D, 910A, 910B, 910C, 910D External memory
3, 31, 32, 33 Nonvolatile memory
10, 40, 50, 60, 70, 80, 901 Processor
11, 41, 51, 61, 71, 81, 902 External bus controller
12, 42, 52, 62, 72, 82 Embedded SRAM
13, 43, 53, 63, 73, 83, 903 Memory controller
32A Set timing value flag
33A Activation count value
84 Memory information input terminal
131, 431, 531, 631, 731, 831 Access selection circuit
132, 432, 532, 632, 732, 832, 904 Memory interface
132A, 132B, 132C, 132D, 432A, 432B, 432C, 432D, 532A, 532B, 532C,
532D, 632A, 632B, 632C, 632D, 732A, 732B, 732C, 732D, 832A, S32B,
832C, 832D Separate memory interface
431A, 531A Memory selection register
431B Address conversion circuit
531B Selector circuit
633 Pattern generating circuit
732A1, 732B1, 732C1, 732D1 Timing separately setting register
902 External nonvolatile memory
930 External SRAM

### Description of Embodiments

### (First embodiment)

The memory access timing adjustment device according to the first embodiment includes separate memory interfaces each of which is separately connected to a corresponding one of the external memories, and a control unit which adjusts an access timing for an external memory selected from the external memories by causing a separate memory interface connected to the selected external memory to transmit and receive data to and from the selected external memory multiple times. This allows, while receiving and transmitting data to and from the selected external memory to adjust the access timing, separately accessing the other external memories and arbitrarily changing the data transfer amount of the memory bus. Thus, the memory access timing adjustment device is capable of adjusting access timing reflecting the amount of transferred data in the memory bus at the time of actual operation.

The following is the detailed description of the memory access timing adjustment device according to the first embodiment of the present invention with reference to the drawing.

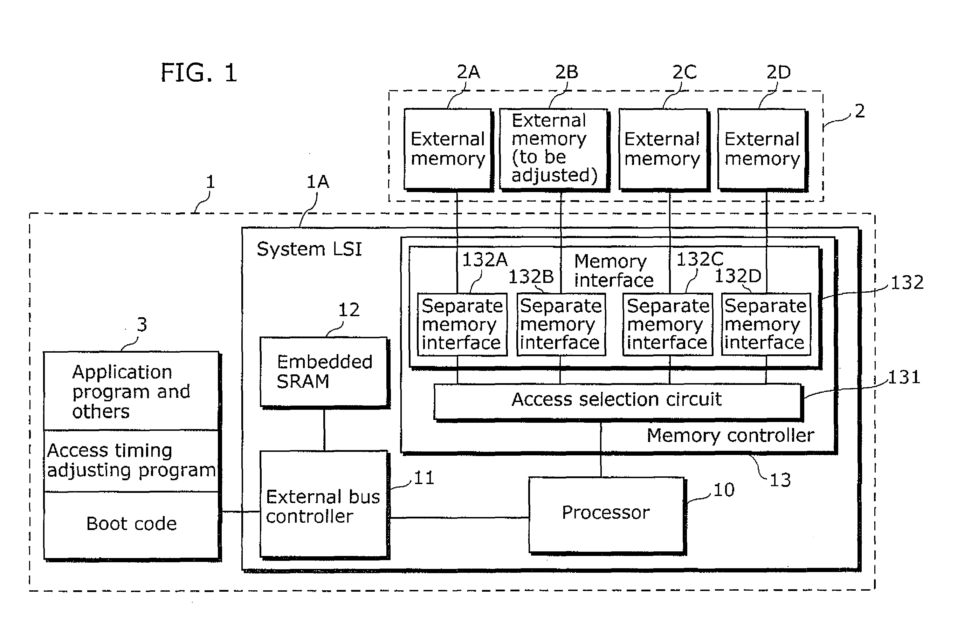

FIG. 1 is a functional structural diagram of the memory access timing adjustment system including the memory access timing adjustment device according to the first embodiment of the present invention. The memory access timing adjustment system in FIG. 1 includes a memory access timing adjustment device 1 and external memories 2. The memory access timing adjustment device 1 includes a system LSI 1A and a nonvolatile memory 3. The external memories 2 include external memories 2A, 2B, 2C and 2D.

The system LSI 1A includes a processor 10, an external bus controller 11, an embedded SRAM 12, and a memory controller 13.

The processor 10 functions as a control unit which adjusts the access timing with the external memories.

The nonvolatile memory 3 is connected to the processor 10 through the external bus controller 11.

The embedded SRAM 12 is connected to the processor 10 through the external bus controller 11, and functions as a work area of the processor 10.

The memory controller 13 is connected between the processor 10 and each of the external memories 2A, 2B, 2C, and 2D, and includes an access selection circuit 131 and a memory interface 132.

The memory interface 132 has separate memory interfaces 132A, 132B, 132C, and 132D embedded. The external memories 2A to 2D are connected to the access selection circuit 131 through the separate memory interfaces 132A to 132D, respectively.

The adjustment operation by the memory access timing adjustment system according to the first embodiment of the present invention with the structure described above is described as follows.

First, the processor 10 reads the boot code from the nonvolatile memory 3 through the external bus controller 11 upon activation, determines various settings of the system LSI 1A, and reads an access timing adjustment program from the nonvolatile memory 3 as well. The access timing adjustment program describes memory addresses each of which is for accessing each of the external memories 2A to 2D.

Next, the access selection circuit 131 selects the external memory whose timing should be adjusted (the external memory 2B in FIG. 1), according to the memory address requested by the processor 10.

For example, Double Data Rate Synchronous DRAM (DDR SDRAM) is used for the external memories 2A to 2D illustrated in FIG. 1. Data strobe signal synchronized to the first clock signal is used in order to notify the timing for transferring the data from the memory controller 13 to the external memories 2A-2D, or from the external memories 2A-2D to the memory controller 13. When reading data from the external memories 2A to 2D, data is output from the external memories 2A to 2D with the same phase as the data strobe. Thus, for certainly receiving the data, the memory controller 13 first generates the data strobe signal with the timing with a phase 90 degrees delayed from the input data strobe signal. Subsequently, data is read at the time when the data strobe signal rises and falls. However, waveform distortion of the received data strobe signal occurs due to external causes such as variation in power source or noise, causing the phase of the received data strobe signal to be displaced when detecting the edges of the data strobe signals. In order to deal with this problem, it is necessary for the memory controller 13 to set the window width within a predetermined phase range from 90 degrees, which is a reference phase difference for reading data. The window width is represented as a phase difference, which can adjust, in one bit, 180 degrees divided by 128, and varies the access timing according to the phase difference set to the access timing adjustment register.

With the abovementioned method, the processor 10 tests the window width which is a range of phase difference for successful memory access, while changing the access timing setting with the external memory 2B. The examination result is sequentially recorded on the embedded SRAM 12, and an optimal setting value for the access timing is determined from the window width.

Subsequently, the processor 10 sequentially executes the determination process for the optimal access timing for all of the external memories 2A-2D while switching the memory to be adjusted.

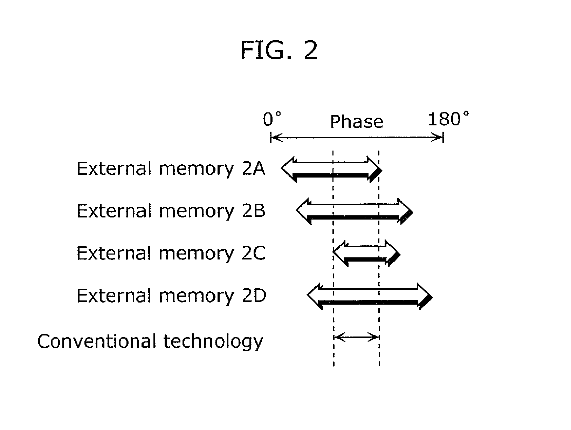

FIG. 2 is a comparative diagram of the window width testing results according to the memory access timing adjustment device of the first embodiment of the present invention and the conventional technology. In FIG. 2, the horizontal axis represents the window width by phase difference. The window widths of the external memories 2A, 2B, 2C, and 2D that are tested by the memory access timing adjustment device according to the first embodiment of the present invention, and the window width of the external memories 2 tested by the conventional technology are sequentially listed.

According to the present invention, the separate memory interfaces 132A to 132D are individually set to the external memories 2A-2D, respectively. Thus, the window width independent for each external memory is tested.

On the other hand, according to the conventional technology, only one common memory interface is provided for the external memories. Thus, the independent window width for each external memory is not tested. Instead, the window widths are simultaneously tested with a set access timing value for all of the external memories. This significantly narrows down the window width obtained by the conventional technology because the window width is a range where all of the external memories 2A-2D normally operates. For this reason, the conventional technology is unable to respond to the variation in window width corresponding to the variation in the transfer amount of the memory bus at the time of actual operation.

On the other hand, the present invention allows the window width to be set at various widths based on the window widths for the external memories 2A-2D illustrated in FIG. 2, assuming the variation in the transfer amount of the memory bus at the time of actual operation.

Note that, the adjustment described above is directed to the operation upon activating the system LSI 1A. However, a case is also possible where the process shifts to the execution of the access timing adjustment from the execution of the application program, by a process switching instruction. In this case, the description above applies after the execution of the access timing adjustment program starts.

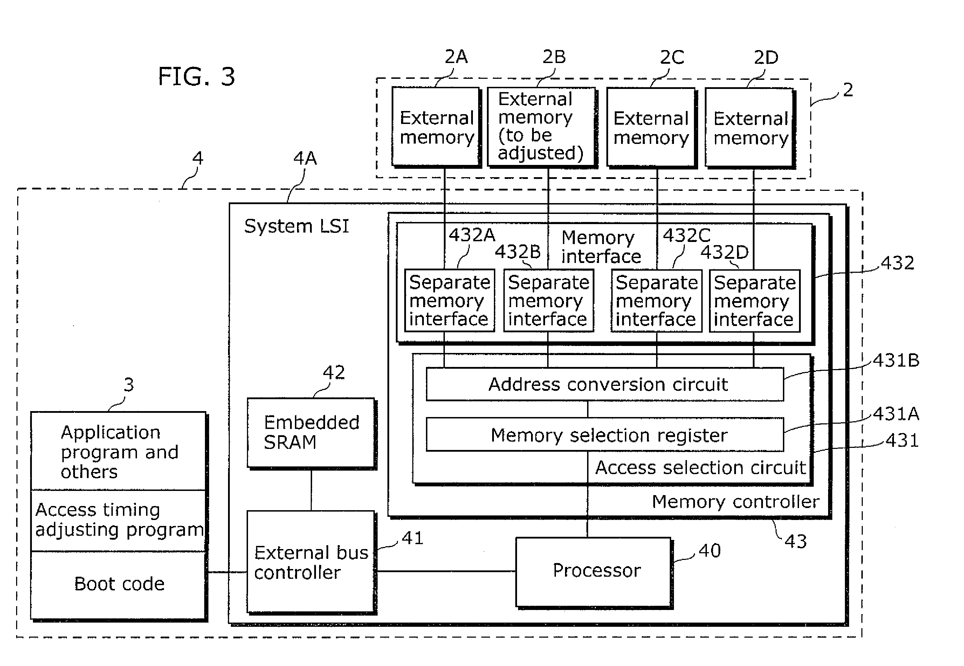

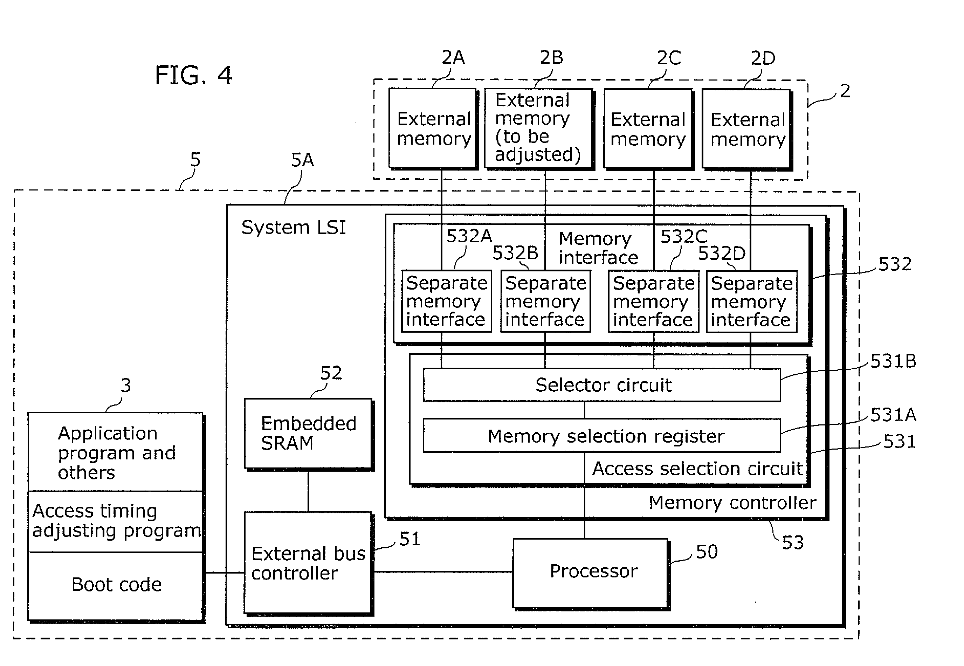

Furthermore, the access selection circuit 131 which is the component of the memory access timing adjustment device 1 illustrated in FIG. 1 may have a functional structure described in FIG. 3 or FIG. 4, for example.

FIG. 3 is a functional structural diagram of the memory access timing adjustment system including the memory access timing adjustment device according to the first variation of the first embodiment of the present invention.

The memory access timing adjustment system in FIG. 3 includes a memory access timing adjustment device 4 and external memories 2. The memory access timing adjustment device 4 includes a system LSI 4A and a nonvolatile memory 3. The external memories 2 include external memories 2A, 2B, 2C and 2D.

The system LSI 4A includes a processor 40, an external bus controller 41, an embedded SRAM 42, and a memory controller 43.

The memory controller 43 is connected between the processor 40 and the external memories 2A, 2B, 2C, and 2D, and includes an access selection circuit 431 and a memory interface 432.

The memory interface 432 has separate memory interfaces 432A, 432B, 432C, and 432D embedded. The external memories 2A-2D are connected to the access selection circuit 431 through the separate memory interfaces 432A to 432D, respectively.

The memory access timing adjustment system in FIG. 3 differs from the memory access timing adjustment system in FIG. 1 in that the functional structure of the access selection circuit 431 is embodied, but otherwise has functionally-equivalent components. The following description focuses on the difference only, skipping the description for the similar points.

The access selection circuit 431 includes a memory selection register 431A and an address conversion circuit 431B.

In the memory access adjustment system illustrated in FIG. 3, the access selection circuit 431 reads the bit, which is set in the memory selection register 431A by the processor 40, for selecting the external memory to be adjusted, and selects the external memory whose timing should be adjusted.

FIG. 4 is a functional structural diagram of the memory access timing adjustment system including the memory access timing adjustment device according to the second variation of the first embodiment of the present invention.

The memory access timing adjustment system in FIG. 4 includes a memory access timing adjustment device 5 and external memories 2. The memory access timing adjustment device 5 includes a system LSI 5A and a nonvolatile memory 3. The external memories 2 include external memories 2A, 2B, 2C and 2D.

The system LSI 5A includes a processor 50, an external bus controller 51, an embedded SRAM 52, and a memory controller 53.

The memory controller 53 is connected between the processor 50 and each of the external memories 2A, 2B, 2C, and 2D, and includes an access selection circuit 531 and a memory interface 532.

The memory interface 532 has separate memory interfaces 532A, 532B, 532C, and 532D embedded. The external memories 2A-2D are connected to the access selection circuit 531 through the separate memory interfaces 532A to 532D, respectively.

The memory access timing adjustment system in FIG. 4 differs from the memory access timing adjustment system in FIG. 1 in that the functional structure of the access selection circuit 531 is embodied, but otherwise has functionally-equivalent components. The following description focuses on the difference only, skipping the description for the similar points.

The access selection circuit 531 includes a memory selection register 531A and a selector circuit 531B.

In the memory access adjustment system illustrated in FIG. 4, the access selection circuit 531 reads the value set on the memory selection register 531A. The selector circuit 531B switches the signal connection using the value, such that the processor 50 can directly access the external memory to be adjusted.

The memory selection register 431A or 531A is provided to the memory access timing adjustment system illustrated in FIG. 3 or 4. This allows the access timing adjustment program executed by the processor 40 or 50 to be used without modification even when the external memory configuration varies or when the connection within the memory controller changes. Furthermore, it is possible to use the same access timing program even for different system LSIs as long as the specification of the memory selection register is identical. Thus, the man-hour for developing a program is reduced.

As described above, according to the memory access timing adjustment system according to the first embodiment of the present invention, the memory controller can access each of the external memories individually by the access selection circuit and the separate memory interfaces. Thus, it is possible to have an optimal access timing for each of the external memories can be obtained, and each of the optimal values is effective even when the configuration of external memory varies or when the connection within the memory controller changes. Furthermore, when the application program operates within the external memory capacity other than the external memory to be tested, it is possible to secure the memory area used by the application program while adjusting the access timing of the external memory to be tested. Thus, it is possible to operate application stably.

Note that, according to the system described in FIGS. 1, 3, and 4, four external memories and four separate memory interfaces are connected to the system LSIs 1A, 4A, and 5A. However, according to the present invention, two or more external memories and separate memory interfaces may be used for achieving the effect.

Furthermore, the nonvolatile memory 3 may be embedded to each system LSI. Conversely, the embedded SRAM may be an external SRAM of each system LSI.

In addition, it is not necessary to write the access timing adjustment program, the application program, and others in the nonvolatile memory 3. The access timing adjustment program; the application program, and others may be downloaded to the RAM provided separately from the nonvolatile memory 3 via the network, and read from each processor.

### (Second embodiment)

The memory access timing adjustment device according to the second embodiment further includes a pattern generating circuit which generates specific pattern data, and a control unit which causes the separate memory interface connected to an external memory other than the selected external memory to transmit the specific pattern data to the external memory other than the selected external memory. This reproduces a case similar to the time when the application is actually operated with the load on the external memories. This allows obtaining a set value for the access timing more stably even at the time of high load, compared to the memory access timing obtained at the time of low load where the frequency of memory access is low.

The following is the detailed description of the memory access timing adjustment device according to the second embodiment of the present invention with reference to the drawing.

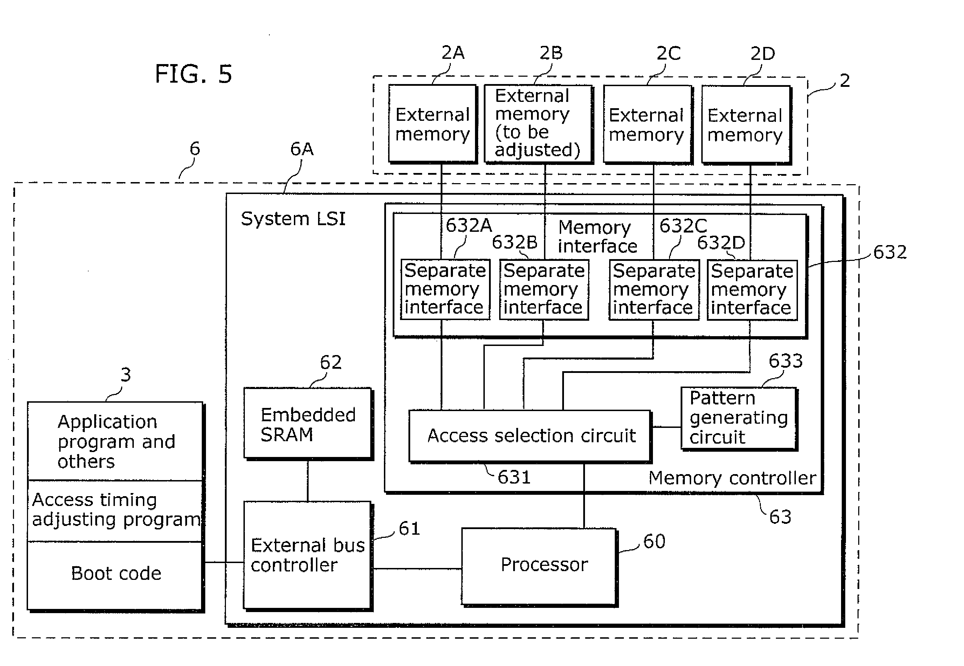

FIG. 5 is a functional structural diagram of the memory access timing adjustment system including the memory access timing adjustment device according to the second embodiment of the present invention.

The memory access timing adjustment system in FIG. 5 includes a memory access timing adjustment device 6 and external memories 2. The memory access timing adjustment device 6 includes a system LSI 6A and a nonvolatile memory 3. The external memories 2 include external memories 2A, 2B, 2C and 2D.

The system LSI 6A includes a processor 60, an external bus controller 61, an embedded SRAM 62, and a memory controller 63.

The processor 60 functions as a control unit which adjusts the access timing with the external memories.

The nonvolatile memory 3 is connected to the processor 60 through the external bus controller 61.

The embedded SRAM 62 is connected to the processor 60 through the external bus controller 61, and functions as a work area of the processor 60.

The memory controller 63 is connected between the.processor 60 and the external memories 2A, 2B, 2C, and 2D, and includes an access selection circuit 631, a memory interface 632, and a pattern generating circuit 633.

The memory interface 632 has separate memory interfaces 632A, 632B, 632C, and 632D embedded. The external memories 2A-2D are connected to the access selection circuit 631 through the separate memory interfaces 632A to 632D, respectively.

The pattern generating circuit 633 is connected to the access selection circuit 631.

The memory access timing adjustment system in FIG. 5 differs from the memory access timing adjustment system in FIG. 1 according to the first embodiment in that the structure and the function of the memory controller 63 are different, but otherwise has functionally-equivalent components. The following description focuses on the difference only, skipping the description for the similar points.

In FIG. 5, when the processor 60 adjusts the access timing of the external memory 2B which is a memory to be adjusted, the access selection circuit 631 first outputs the specific pattern data generated by the pattern generating circuit 633 in the memory controller 63 to the external memories 2A, 2C, and 2D, which are other than the external memory 2B. The separate memory interfaces 632A, 632C, and 632D continue accessing the external memories using the specific pattern until the access timing adjustment of the external memory 2B is complete.

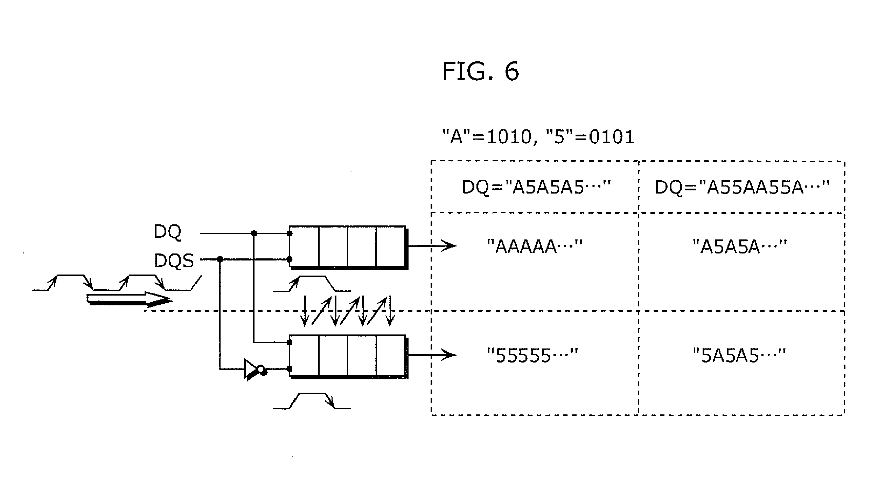

Here, the specific pattern data generated by the pattern generating circuit 633 is described with reference to FIG. 6. FIG. 6 is an operational timing chart when the separate memory interface or the external memory reads specific pattern data.

When the access timing of the external memory 2B which is a memory to be adjusted is adjusted, the specific pattern data generated by the pattern generating circuit 633 is read into the external memories 2A, 2C, and 2D, and then read out. Subsequently, the separate memory interfaces 632A, 632C, and 632D connected to the corresponding one of the external memories read the specific pattern data. In FIG. 6, the register illustrated above sequentially holds 4-bit data when the received data strobe signal rises, and the register illustrated below sequentially holds 4-bit data when the received data strobe signal falls.

For example, when the 4-bit data sequence is "A5A5A5..." including "A" (1010) and "5" (0101) which have sequences opposite to each other, the 4-bit data is alternately held in the upper register and the lower register according to the change in the data strobe signal. Thus, the upper register holds the data in the order of "AAA..." and the lower register holds the data in the order of "555...". Thus, the 4-bit data sequence "A5A5A5..." is a pattern data with no data change, that is, low bit toggle rate, for the upper register and the lower register. However, the pattern has a high bit toggle rate for an external memory bus, since the data changes for each edge of the data strobe.

On the other hand, when the 4-bit data sequence is "A55AA55A...", the 4-bit data is alternately held by the upper register and the lower register according to the change in the data strobe signal. Thus, the upper register holds the data in the order of "A5A5...", and the lower register holds the data in the order of "5A5A5...". Thus, the 4-bit data sequence "A55AA55A..." is a pattern data with large data change, that is, a high bit toggle rate, for the upper register and the lower register. However, for an external memory bus, the pattern involves a bit toggle for each two edges of the data strobe. The combination of these patterns achieves access with a high bit toggle rate for both the internal bus and the external memory bus.

The access timing adjustment is described with reference to FIG. 5 again. When the timing adjustment for the external memory 2B which is a memory to be adjusted is completed, the access selection circuit 631 adjusts the timing of another external memory. For example, when the external memory 2C is to be adjusted according to the instruction from the processor 60, the access selection circuit 631 executes the access pattern generated by the pattern generating circuit 633 to the external memories 2A, 2B, and 2D. Similarly, this operation is performed on the external memories other than the memory to be adjusted, when another external memory is specified as a memory whose timing should be adjusted.

This allows accessing, with high-load pattern data in which all of the bits are toggled for each clock as described above, the external memories 2A, 2C, and 2D which are other than the external memory 2B, from a state where only an access to the external memory 2B which is a memory to be adjusted is generated. Thus, it is possible to achieve a status in which the entire memory interface is operating with high load, which is similar to the time when the application is actually operated. More specifically, the value close to the optimal memory access timing at the time of actual operation of the application is obtained during the access timing adjustment, thereby increasing the stability in memory access at the time of actual operation of the application.

### (Third embodiment)

The memory access timing adjustment device according to the third embodiment includes a nonvolatile memory which stores the optimal access timing obtained by adjusting the access timing, reads the optimal access timing in the separate access timing setting register provided for each of the separate memory interfaces at the time of system activation, and uses the optimal access timing for the data access with the selected external memory. This eliminates the necessity for the access timing adjustment every time the system is normally activated, reducing the activation time.

The following is the detailed description of the memory access timing adjustment device according to the third embodiment of the present invention with reference to the drawing.

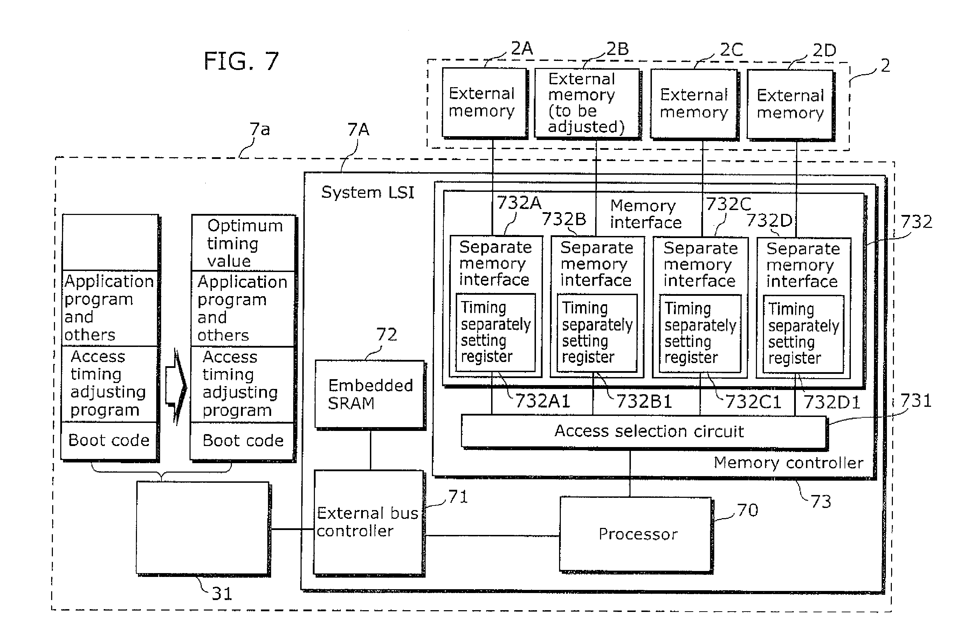

FIG. 7 is a functional structural diagram of the memory access timing adjustment system including the memory access timing adjustment device according to the third embodiment of the present invention. The memory access timing adjustment system in FIG. 7 includes a memory access timing adjustment device 7a and external memories 2. The memory access timing adjustment device 7a includes a system LSI 7A and a nonvolatile memory 31. The external memories 2 include external memories 2A, 2B, 2C and 2D.

The system LSI 7A includes a processor 70, an external bus controller 71, an embedded SRAM 72, and a memory controller 73.

The processor 70 functions as a control unit which adjusts the access timing with the external memories.

The nonvolatile memory 31 is connected to the processor 70 through the external bus controller 71.

The embedded SRAM 72 is connected to the processor 70 through the external bus controller 71, and functions as a work area of the processor 70.

The memory controller 73 is connected between the processor 70 and each of the external memories 2A, 2B, 2C, and 2D, and includes an access selection circuit 731 and a memory interface 732.

The memory interface 732 has separate memory interfaces 732A, 732B, 732C, and 732D embedded. The external memories 2A-2D are connected to the access selection circuit 731 through the separate memory interfaces 732A to 732D, respectively.

Furthermore, the separate memory interfaces 732A, 732B, 732C, and 732D respectively include timing separately setting registers 732A1, 732B1, 732C1, and 732D1.

The memory access timing adjustment system in FIG. 7 differs from the memory access timing adjustment system in FIG. 1 according to the first embodiment in that the structure and the function of the memory controller 73 are different, but otherwise has functionally-equivalent components. The following description focuses on the difference only, skipping the description for the similar points.

In FIG. 7, the system LSI 7A reads the access timing adjustment program from the nonvolatile memory 31, and executes the access timing adjustment program. After adjusting the access timing, the processor 70 sets the optimal timing value for the timing separately setting registers 732A1 to 732D1 in the separate memory interfaces 732A to 732D, each of which is the optimal access timing for each of the external memories. At the same time, the processor 70 writes the optimal timing values on the nonvolatile memory 31.

In addition, the processor replaces the access timing adjustment program with the optimal timing value setting program at the same time.

When the system is activated next time, the processor 70 reads the optimal timing value setting program, and sets, on the timing separately setting registers 732A1 to 732D1, the optimal timing value written in the nonvolatile memory 31, according to the program.

With this, the optimal timing value obtained by the access timing adjustment is stored in the nonvolatile memory. This eliminates the necessity for adjusting the access timing each time the system is normally activated, reducing the activation time.

Note that, although the operational description above describes that the processor 70 writes the optimal timing value on the nonvolatile memory 31 after the first access timing adjustment is performed, and replaces the access timing adjustment program with the optimal timing value setting program. However, the programs are not necessarily replaced by the processor 70. A nonvolatile memory on which the access timing adjustment program is written is connected to the system LSI 7A, and after the processor executes the program and obtains the optimal timing value. Subsequently, a nonvolatile memory on which the access timing adjustment program is written may be replaced with a nonvolatile memory on which the optimal timing value and the optimal timing value setting program are written, before shipment from the factory.

Alternatively, only the optimal timing value may be written on a nonvolatile memory different from the nonvolatile memory 31 including the boot code, and the content of the nonvolatile memory 31 including the boot code may be rewritten before shipment.

This eliminates the necessity for the access timing readjustment when the user activates the system, if the system does not require access timing adjustment after the system is released to the user. This is because the access timing adjustment needs to be performed before shipment from the factory only, thereby reducing the activation time.

### (Fourth embodiment)

The memory access timing adjustment device according to the fourth embodiment of the present invention includes a nonvolatile memory which records the optimal access timing obtained by the access timing adjustment and the set timing value flag indicating whether or not the optimal access timing is valid, and a control unit which newly adjusts the access timing when the set timing value flag is invalid at the time when the system is activated, and writes the optimal access timing obtained by the access timing adjustment on the nonvolatile memory. With this, setting the set timing value flag as invalid in advance allows the optimal access to the external memory adjusted to the change in the system configuration and the status, since the access timing adjustment is automatically updated at the time when the system is activated next time.

The following is the detailed description of the memory access timing adjustment device according to the fourth embodiment of the present invention with reference to the drawing.

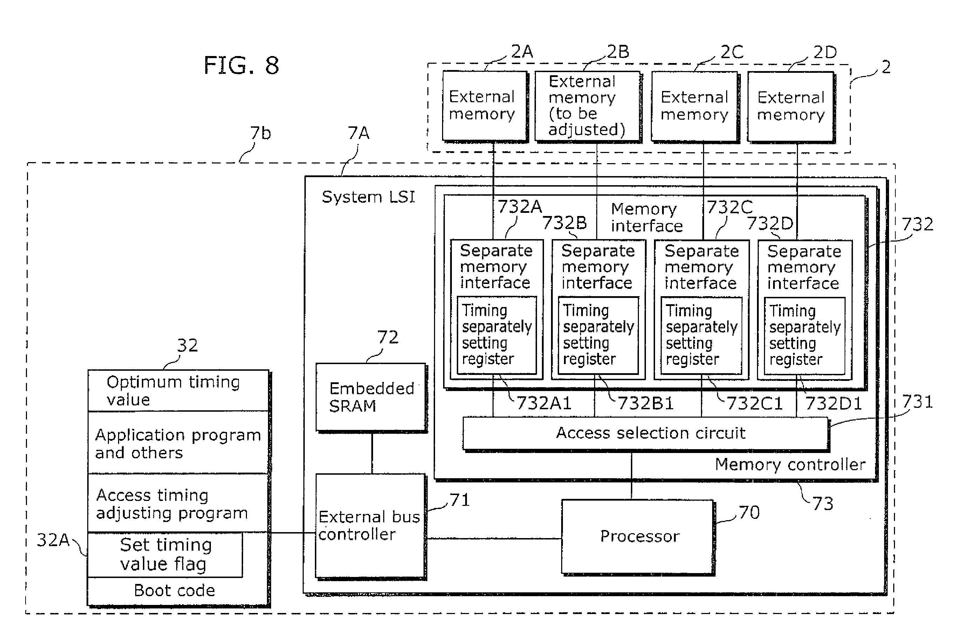

FIG. 8 is a functional structural diagram of the memory access timing adjustment system including the memory access timing adjustment device according to the fourth embodiment of the present invention. The memory access timing adjustment system in FIG. 8 includes a memory access timing adjustment device 7b and external memories 2. The memory access timing adjustment device 7b includes a system LSI 7A and a nonvolatile memory 32. The external memories 2 include external memories 2A, 2B, 2C and 2D.

The memory access timing adjustment system in FIG. 8 differs from the memory access timing adjustment system in FIG. 7 according to the third embodiment in that the structure and the function of the nonvolatile memory 32 are different, but otherwise has functionally-equivalent components. The following description focuses on the difference only, skipping the description for the similar points.

The nonvolatile memory 32 is connected to the processor 70 through the external bus controller 71.

In FIG. 8, the optimal access timing values each of which is the optimal access timing for each of the external memories 2A, 2B, 2C, and 2D are set in the timing separately setting registers 732A1 to 732D1 included in the separate memory interfaces 732A to 732D by the processor 70, respectively.

At the same time, the processor 70 writes the optimal access timing value calculated for each external memory on a specific area of the nonvolatile memory 32.

The processor 70 further writes the set timing value flag 32A indicating whether or not the set access timing value written on the nonvolatile memory 32 at the same time as writing the optimal access timing value on the nonvolatile memory 32, or at other timing.

Subsequently, when the system LSI 7A is rebooted since the system is reset or the power is restored, the processor 70 checks the set timing value flag 32A while reading the boot code from the nonvolatile memory 32 and activating the system, and sets the optimal access timing value written on the nonvolatile memory 32 on the timing separately setting registers 732A1 to 732D1 on the separate memory interfaces 732A to 732D, if the set timing value flag 32A is valid.

On the other hand, when the set timing value flag 32A indicates invalid, the processor 70 activates the access timing adjusting program, and sets the optimal access timing value obtained by another access timing adjustment, on the timing separately setting registers 732A1 to 732D1.

This eliminates the necessity for the access timing adjustment each time the system is reset or the power is applied, and the access timing adjustment is performed only when it is determined that the access timing adjustment is necessary, thereby reducing the system activation time.

Here, the processor 70 does not necessarily rewrite the set timing value flag 32A. Alternatively, a fixed value may be written on some systems at the time of shipment, and it is possible to execute the access timing adjustment each time the system is activated, or the timing set value written on the nonvolatile memory 32 may always be used as the optimal value.

Furthermore, it is possible to set an invalid flag at the time of shipment, and rewrites the flag to valid after the completion of the first access timing adjustment when activating the system on the user side is completed. This allows the use of the optimal timing value of the nonvolatile memory 32 when the system is activated next time.

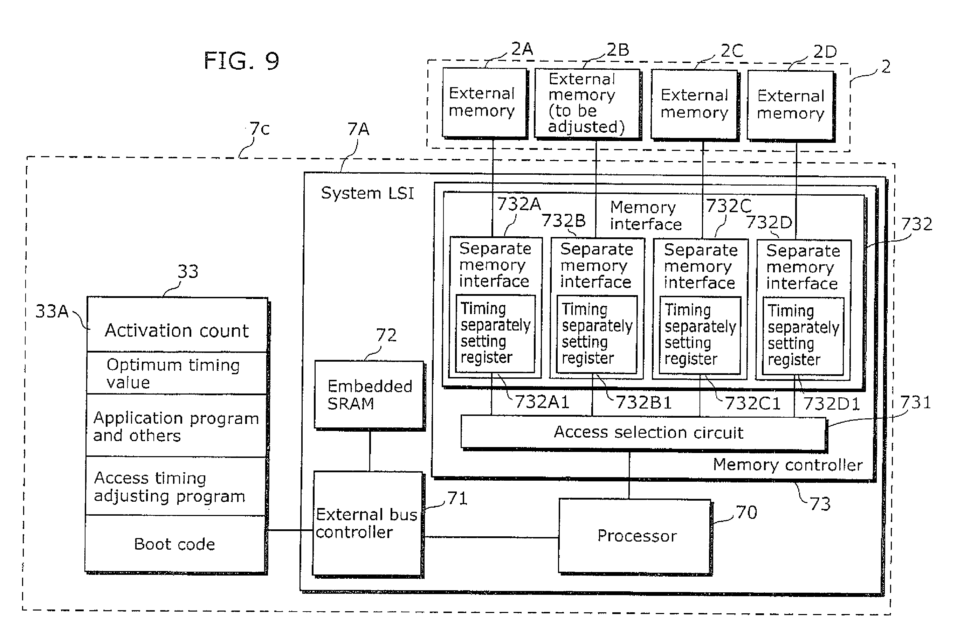

The following describes another embodiment of the memory access timing adjustment device according to the fourth embodiment of the present invention illustrated in FIG. 9.

FIG. 9 is a functional structural diagram of the memory access timing adjustment system including the memory access timing adjustment device according to the fourth embodiment of the present invention. The memory access timing adjustment system in FIG. 9 includes a memory access timing adjustment device 7c and external memories 2. The memory access timing adjustment device 7c includes a system LSI 7A and a nonvolatile memory 33. The external memories 2 include external memories 2A, 2B, 2C and 2D.

The memory access timing adjustment system in FIG. 9 differs from the memory access timing adjustment system in FIG. 8 according to the fourth embodiment in that the structure and the function of the nonvolatile memory 33 are different, but otherwise has functionally-equivalent components. The following description focuses on the difference only, skipping the description for the similar points.

In the memory access timing adjustment system illustrated in FIG. 9, the processor 70 reads, instead of the set timing value flag 32A, the activation count value 33A written in the nonvolatile memory 33 each time the system is activated, updates the value, and writes the value back to the nonvolatile memory 33. The processor 70 determines whether or not the access timing is adjusted, based on the activation count value 33A read at the time when the system is activated.

For example, when the activation count value 33A is smaller than the predetermined value, the processor reads the optimal timing value written in the nonvolatile memory 33, and sets the value on the timing separately setting registers 732A1 to 732D1 in the separate memory interfaces 732A to 732D.

When the activation count value 33A reaches the predetermined value, the processor 70 executes the access timing adjustment program, and adjusts the access timing of the external memories 2A to 2D. Subsequently, at the same time as setting the obtained optimal timing value on the timing separately setting registers 732A1 to 732D1, the processor 70 writes the optimal timing value on the nonvolatile memory 33, and updates the activation count value 33A to a specific value.

Subsequently, the processor 70 sets the optimal timing value written on the nonvolatile memory 33 on the timing separately setting registers 732A1 to 732D1, until the activation count value 33A reaches the predetermined value.

Note that, in the description above, the number of system activation is counted, and the determination on whether or not the access timing is adjusted is determined based on the value. However, in a system capable of managing time information, the sum of the time when the system is used may be written on the nonvolatile memory 33, instead of the activation count value, as a reference on whether or not the access timing is adjusted.

With the structure illustrated in the fourth embodiment and the variations allows using either the optimal access timing value stored in the nonvolatile memory in advance or the optimal access timing value newly obtained by the access timing adjustment, depending on the conditions such as the number of uses and accumulated time. Thus, the activation time can be reduced and stable memory access operation can be achieved.

### (Fifth embodiment)

The memory access adjustment device according to the fifth embodiment further includes a memory information input terminal for inputting signal indicating the configuration of the external memories, and changes, adds, or deletes the address spaces allocated to the external memories according to the signal. This allows finding out the size and connection status of the external memories, thereby achieving the access timing adjustment adjusted to the status of the external memories.

The following is the detailed description of the memory access timing adjustment device according to the fifth embodiment of the present invention with reference to the drawing.

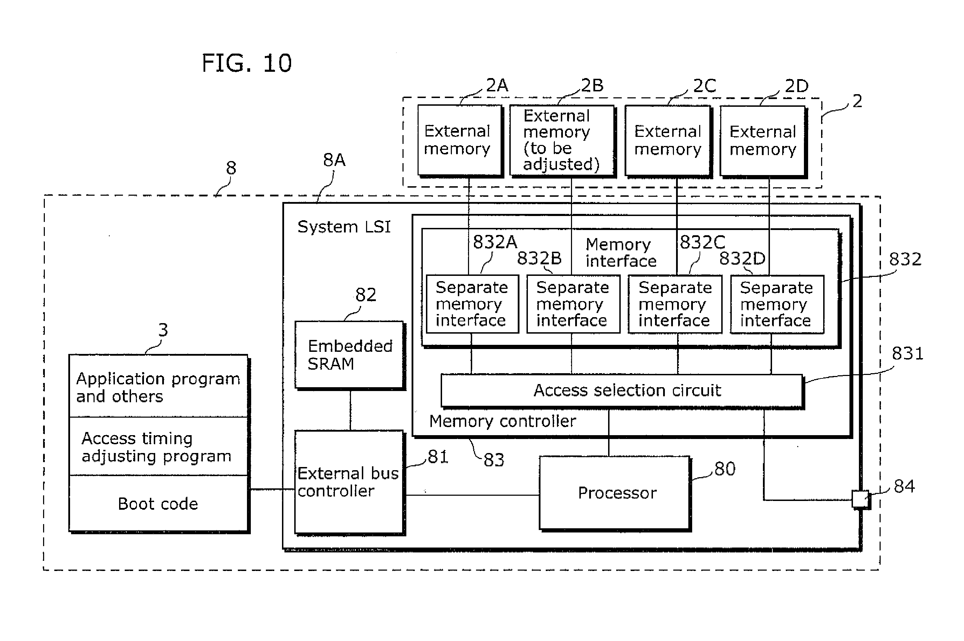

FIG. 10 is a functional structural diagram of the memory access timing adjustment system including the memory access timing adjustment device according to the fifth embodiment of the present invention. The memory access timing adjustment system in FIG. 10 includes a memory access timing adjustment device 8 and external memories 2. The memory access timing adjustment device 8 includes a system LSI 8A and a nonvolatile memory 3. The external memories 2 include external memories 2A, 2B, 2C and 2D.

The system LSI 8A includes a processor 80, an external bus controller 81, an embedded SRAM 82, a memory controller 83, and a memory information input terminal 84.

The memory access timing adjustment system in FIG. 10 differs from the memory access timing adjustment system in FIG. 1 according to the first embodiment in that the memory information input terminal 84 is included in the system LSI 8A, but otherwise has functionally-equivalent components. The following description focuses on the difference only, skipping the description for the similar points as FIG. 1.

In FIG. 10, the system LSI 8A includes the memory information input terminal 84 for inputting the memory information such as whether or not the external memory is connected to the separate memory interfaces 832A, 832B, 832C, and 832D, and the capacity of each of the external memories 2A to 2D being connected.

The memory information input terminal 84 is connected to the DIP switch on the system board, for example, and on/off of the DIP switch may be used as the connection information.

Furthermore, the memory information input terminal 84 is connected to the access selection circuit 831 in the memory controller 83. The access selection circuit 831 changes, adds, or deletes the address space allocated to the external memory to be adjusted according to the input memory information, in response to the memory access timing adjustment instruction by the processor 80.

For example, when the memory capacity of the external memory 2A changes from the standard X bites to Y bites, the access selection circuit 831 determines the change based on the input memory information, and changes the memory address to be used for the access timing adjustment of the external memories 2A to 2D as necessary. Furthermore, when the external memory 2B is removed from the system, for example, the access selection circuit 831 determines that based on the input memory information, and changes the order such that the external memory 2C is selected as the external memory to be adjusted after the access timing adjustment for the external memory 2A is completed. Furthermore, the access selection circuit 831 may notify the processor 80 of the cancellation of the timing adjustment of the external memory 2B.

This configuration allows the change in memory configuration with some flexibility, without changing the access timing adjustment program. Furthermore, it is possible to achieve the access timing adjustment according the status of the external memory.

Note that, although the memory information input terminal 84 is directly connected to the access selection circuit 831 in the fifth embodiment, the memory information input terminal 84 may be connected to any register in the register space of the system LSI 8A. In this case, the processor 80 may reads the register value and sets the operation of the access selection circuit 831. Needless to say, the register value reflecting the status of the memory information input terminal 84 may be read by the access selection circuit 831, and the access selection circuit 831 may change the operation status.

### (Sixth embodiment)

The memory access timing adjustment device according to the sixth embodiment outputs an alert message when the window width of the access timing obtained by adjusting the access timing is equal to or less than the predetermined value. With this, the memory access timing adjustment device can notify the user of the malfunction.

The following is the detailed description of the memory access timing adjustment device according to the sixth embodiment of the present invention with reference to the drawing.

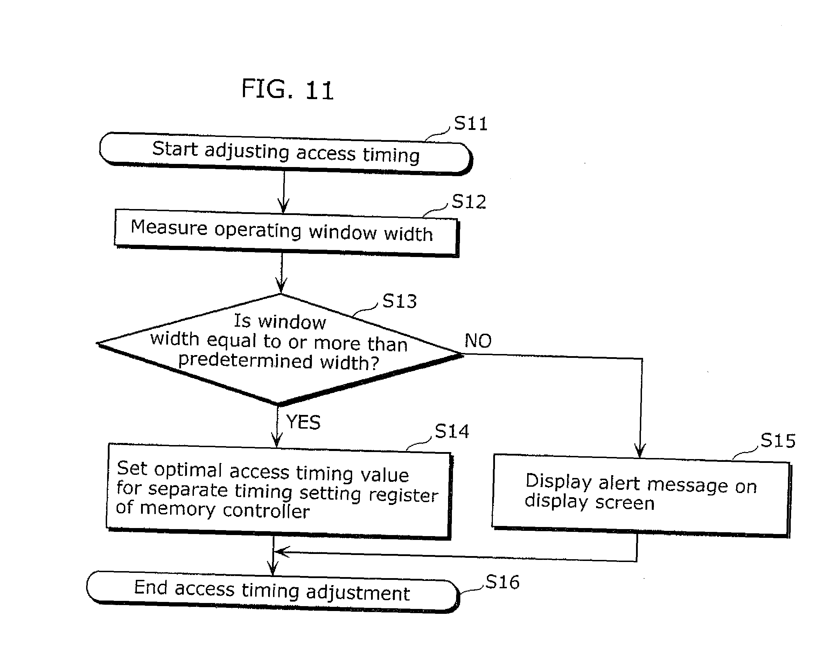

FIG. 11 is a flowchart of the memory access timing adjustment system including the memory access timing adjustment device according to the sixth embodiment of the present invention. Note that, the memory access timing adjustment device according to the sixth embodiment may be a memory access timing adjustment device according to any of the first to the fifth embodiments. Here, the description is made assuming that the memory access timing adjustment device is the memory access timing adjustment device 7a according to the third embodiment.

The processor 70 first starts adjusting the access timing (step S11).

Subsequently, the processor 70 measures, for each of the external memories 2A to 2D, a range where a normal operation is performed, that is, the window width, while changing the access timing (step S12).

Subsequently, the processor 70 determines whether or not the obtained window width is equal to or wider than the predetermined width (step S13).

In step S13, when it is determined that the obtained window width is wider than the predetermined width (Yes in step S13), the processor 70 sets the optimal access timing value determined by the window width on the timing separately setting registers 732A1 to 732D1 included in the separate memory interfaces 732A to 732D in the memory controller 73 (step S14).

When it is determined that the obtained window width is equal to or less than the predetermined width (No in step S13), the processor 70 displays the alert on lowered capacity on the display screen, from the system LSI 7A through the image output circuit included in the system LSI 7A, and outputs the alert message for an alert using the LED display and sound (step S15).

Finally, the processor 70 ends the access timing adjustment (step S16).

Note that, although in the description above, only one determination is performed as to whether or not the window width is wider than the predetermined width, when the window width is equal to or smaller than the predetermined width, the optimal value may be set on the separate timing adjustment register on the separate memory interface, or an alert may be sent to the user, by repeating the measurement and determination of the window width multiple times.

The operations described above allow outputting the information outside the system LSI when the malfunction is detected by the access timing adjustment result. This allows notifying the user of the malfunction.

Although only some exemplary embodiments of this invention have been described in detail above, those skilled in the art will readily appreciate that another embodiment achieved by combining any component in the first to the sixth embodiments and many modifications in the first to the sixth embodiments, and devices in which the memory access timing adjustment device according to the present invention is embedded are possible without materially departing from the novel teachings and advantages of the memory access timing adjustment device and the memory access timing adjustment method according the present invention. Accordingly, all such modifications are intended to be included within the scope of this invention.

For example, in the second embodiment, the specific pattern data is generated and the memory interface is put in the high-load status such that the actual application operation status is reproduced at the time of memory access timing adjustment. However, in all embodiments other than the second embodiments, the specific pattern data may be generated by the pattern generating circuit at the time of memory access adjustment, and the memory access timing adjustment maybe performed after making the memory interface always highly loaded.

Note that, in this case, the pattern generating circuit may not necessarily be connected to the access selection circuit. For example, the pattern generating circuit may be directly connected to each of the separate memory interfaces. In this case, the highly loaded status of the memory interface is reproduced by sending an instruction from the processor or the access selection circuit that causes the separate memory interfaces connected to external memories other than the external memory to be adjusted to output the specific data, not causing the separate memory interface connected to the external memory to be adjusted to output the specific pattern data.

### Industrial Applicability

The present invention is effective for the memory access timing adjustment device which adjusts the access timing on the memory and the memory access timing adjustment system. Particularly, the present invention is suitable for the memory access timing adjustment device which expands the operational margin of the memory access at the time when the system LSI for digital AV device is highly loaded.

## Claims

1. A memory access timing adjustment device which adjusts timing for accessing external memories, said memory access timing adjustment device comprising:
separate memory interfaces each of which is separately connected to a corresponding one of the external memories and which transmits and receives data for memory access; and
a control unit configured to adjust an access timing for an external memory selected from the external memories by causing a separate memory interface connected to the selected external memory to transmit and receive data to and from the selected external memory multiple times.

2. The memory access timing adjustment device according to Claim 1,
wherein the external memories are clock synchronized memories each of which performs input and output operations synchronized to a first clock signal,
each of said separate memory interfaces inputs and outputs data using a second clock signal obtained by delaying the first clock signal,
the access timing is a phase difference between the first clock signal and the second clock signal, and
said control unit is configured to change the access timing for said separate memory interface, to determine, each time the access timing is changed, whether or not the access is successful, and to adjust an optimal access timing within a range of phase differences for the successful access.

3. The memory access timing adjustment device according to Claim 1, further comprising
a pattern generating circuit which generates specific pattern data,
wherein said control unit is configured to place a load on the external memories by causing at least one separate memory interface connected to at least one external memory other than the selected external memory to transmit the specific pattern data to the at least one external memory.

4. The memory access timing adjustment device according to Claim 1, further comprising:
a memory selection register which holds a bit indicating the selected external memory; and
an address conversion circuit which is connected to said separate memory interfaces and outputs an address of the external memory corresponding to the bit indicating the selected external memory.

5. The memory access timing adjustment device according to Claim 1, further comprising:
a memory selection register which holds a bit indicating the selected external memory; and
a selector circuit which is connected to the separate memory interfaces and selects a separate memory interface connected to the selected external memory, using the bit indicating the selected external memory.

6. The memory access timing adjustment device according to Claim 1, further comprising
a nonvolatile memory which stores access timings obtained by the access timing adjustment, and each of which is an optimal access timing for each of said separate external memories,
wherein each of said separate memory interfaces includes
a timing separately setting register which stores, when a system is activated, the optimal access timing read from said nonvolatile memory, and
each of said separate memory interfaces uses the optimal access timing for accessing the selected external memory, the optimal access timing being stored in the timing separately setting register.

7. The memory access timing adjustment device according to Claim 1, further comprising
a nonvolatile memory which stores (i) access timings obtained by the access timing adjustment, and each of which is an optimal access timing for each of said separate external memories and (ii) a system activation count,
wherein each of said separate memory interfaces includes
a timing separately setting register which stores, when a system is activated, the optimal access timing read from said nonvolatile memory, and
said control unit newly adjusts access timing each time the system is activated for a predetermined number of times, and writes, on the nonvolatile memory, the optimal access timing obtained by the access timing adjustment.

8. The memory access timing adjustment device according to Claim 1, further comprising
a nonvolatile memory which stores (i) access timings obtained by the access timing adjustment, and each of which is an optimal access timing for each of said separate external memories and (ii) a set timing value flag indicating whether or not the optimal access timing is valid,
wherein each of said separate memory interfaces includes
a timing separately setting register which stores, when a system is activated, the optimal access timing read from said nonvolatile memory, and
when the set timing value flag is invalid at the time of system activation, said control unit newly adjusts access timing and writes, on the nonvolatile memory, the optimal timing obtained by the access timing adjustment.

9. The memory access timing adjustment device according to Claim 1, further comprising
a memory information input terminal for inputting a signal indicating a configuration of the external memories,
wherein an address space allocated to the external memories is changed, added, or removed according to the signal indicating the configuration of the external memories.

10. The memory access timing adjustment device according to Claim 1,
wherein said control unit outputs an alert message when an optimal range of the access timing obtained through the adjustment is equal to or smaller than a predetermined value.

11. A memory access timing adjustment method for a memory access timing adjustment system which includes external memories and separate memory interfaces which access the external memories, said memory access timing adjustment method comprising:
selecting an external memory whose access timing is to be adjusted from the external memories; and
adjusting an access timing for the selected external memory by causing a separate memory interface connected to the selected external memory to transmit and receive data to and from the selected memory.

12. The memory access timing adjustment method for the memory access timing adjustment system according to Claim 11,
wherein the external memories are clock synchronized memories each of which performs input and output operations synchronized to a first clock signal,
each of said separate memory interfaces inputs and outputs data using a second clock signal obtained by delaying the first clock signal,
the access timing is a phase difference between the first clock signal and the second clock signal, and
said adjusting includes:
changing the access timing for the separate memory interface and determining, each time the access timing is changed, whether or not the access is successful; and
adjusting an optimal access timing within a range of phase differences for the successful access.

13. The memory access timing adjustment method for the memory access timing adjustment system according to Claim 11, said method further comprising
placing a load on the external memories simultaneously as said adjusting, by causing a pattern generating circuit which generates specific pattern data to transmit the specific pattern data, through at least one separate memory interface connected to at least one external memory other than the selected external memory, to the at least one external memory.

14. The memory access timing adjustment method for the memory access timing adjustment system according to Claim 11,
wherein said selecting further includes:
holding bit information indicating the selected external memory in a memory selection register; and
converting the bit information held by the memory selection register into an address of the selected external memory by an address conversion circuit which is connected to said separate memory interfaces.

15. The memory access timing adjustment method for the memory access timing adjustment system according to Claim 11,
wherein said selecting further includes:
holding bit information indicating the selected external memory in a memory selection register; and
selecting a separate memory interface connected to the selected memory by a selector circuit which is connected to the separate memory interfaces, using the bit information held by the memory selection register.

16. The memory access timing adjustment method for the memory access timing adjustment system according to Claim 11, said method further comprising:
writing on a nonvolatile memory after said adjusting, access timings each of which is an optimal access timing for each of said separate external memories adjusted in said adjusting,
reading, after said writing, the optimal access timing when the system is activated,
holding, after said reading, optimal access timings each of which corresponds to each of the external memory in each of timing separately setting registers provided for a corresponding one of the separate memory interfaces, and
using, after said holding, the optimal access timings as the access timings for the external memories for accessing the external memories, each of the optimal access timings being stored in a corresponding one of the separate timing setting registers.

17. The memory access timing adjustment method for the memory access timing adjustment system according to Claim 16, said method further comprising
newly adjusting, after said writing, access timing each time the system is activated for a predetermined number of times, and writing, on the nonvolatile memory, the optimal access timing obtained by the access timing adjustment.

18. The memory access timing adjustment method for the memory access timing adjustment system according to Claim 16, said method further comprising
newly adjusting access timing when a set timing value flag (i) indicating whether or not the optimal access timing is valid and (ii) written on the nonvolatile memory in advance is invalid at the time of system activation, and writing, on the nonvolatile memory, the optimal timing obtained by the access timing adjustment.

19. The memory access timing adjustment method for the memory access timing adjustment system according to Claim 11, said method further comprising
receiving, before said selecting, a change in a configuration of the external memories as an external signal from a memory configuration input terminal ,
changing, adding, or removing an address space allocated to the external memories is changed, added, or removed according to information indicating the change in the configuration of the external memories received in said receiving.

20. The memory access timing adjustment method for the memory access timing adjustment system according to Claim 11, said method further comprising:
comparing, after said adjusting, an optimum range of access timing obtained in said adjusting and a predetermined value; and
outputting an alert message when the optimal range of the access timing is equal to or smaller than the predetermined value in said comparing.
